Europäisches Patentamt

**European Patent Office**

**Office européen des brevets**

(11) Publication number: **0 032 601**
A1

## EUROPEAN PATENT APPLICATION

(21) Application number: **80201231.0**

(22) Date of filing: **19.12.80**

(51) Int. Cl.³: **A 01 D 87/10,** F 04 D 29/28, F 04 D 23/00

(30) Priority: **20.12.79 NL 7909202**

(43) Date of publication of application: **29.07.81** Bulletin **81/30**

(84) Designated Contracting States: **AT BE CH DE FR GB IT LI LU NL SE**

(71) Applicant: **Trioliet-Mullos Silo Nederland B.V., Smitsbreeweg 2, NL-7581 HE Losser (NL)**

(72) Inventor: **Liet, Cornelis Hendricus, Denekamperdijk 38, NL-7581 PJ Losser (NL)**
Inventor: **Liet, Fredericus, Wilgenkamp 74, NL-7581 HD Losser (NL)**

(74) Representative: **Jacobson, Gerard et al, Octrooibureau Los en Stigter B.V. Postbus 20052, NL-1000 HB AMSTERDAM (NL)**

(54) **Blower for pneumatic transportation.**

(57) Blower for pneumatic conveyance, for instance of forage, such as grass, maize or the like, comprising a volute (1) having an inlet opening and being provided with a substantially tangential outlet (3), and further comprising a driven blade wheel (4) journalled in the volute (1) and having an end plate (6) on which blades (8) are mounted. The blade wheel (4) has a second end plate, which is provided with a suction opening, whilst the blades are connected between the two end plates, an intake means (10) which is movable with respect to the blade wheel extending at the inner end of each blade (8).

BLOWER FOR PNEUMATIC CONVEYANCE

The invention relates to a blower for pneumatic conveyance, for instance of forage, such as grass, maize or the like, comprising a volute having an inlet opening and being provided with a substantially tangential outlet, and further comprising a driven blade wheel journalled in the volute and having an end plate on which blades are mounted.

The known blowers for the pneumatic conveyance of forage, which in harvest time often serve for feeding the material from a transport waggon or the like to a storage silo and which are often used during the winter for supplying the forage from a storage silo to a feeding place, are provided with a blade wheel, which consists of an end plate, which at one side is connected to a horizontal drive shaft, that is mostly driven by an electric motor, whilst on the other side of the end plate a plurality of curved blades is mounted, the height of these blades being smallest at the inner end and increases towards the circumference of the end plate.

This known blower has the disadvantage that the efficiency is relatively low, due to the fact that when a large resistance inside the volute occurs the air stream may whirl back to the inlet opening of the volute instead of flowing towards the outlet, which phenomenon influences the velocity pressure in an unfavourable way. This relatively low efficiency is the more so disadvantageous, as at the present time everincreasing capacities of the blowers are required, whilst the motor power cannot be indefinitely enlarged, as for instance the maximum current strength of the electric installation limits the same.

It is an object of the present invention to provide a blower of the above-mentioned type, wherein the efficiency is considerably improved.

For this purpose the blower according to the invention is characterized in that the blade wheel has a second end plate, which is provided with a suction opening,

0032601

whilst the blades are connected between the two end plates, an intake means which is movable with respect to the blade wheel extending at the inner end of each blade.

It is observed that it is known to provide radial air ventilators with a blade wheel, which comprises two parallel end plates, between which the blades extend with a constant height. However, such blade wheel with two end plates, which provides an excellent air guidance in a radial direction and which therefore has a favourable efficiency, is wholly unsuitable in its unchanged form for the conveyance of air in which forage or the like is floating, as this material would deposit on the inner end edges of the blade, or would fold itself around these inner end edges, so that the passages of the blade wheel would be clogged practically immediately.

However, according to the invention it is realized that this clogging may be prevented by the application of an intake means at the inner end of each blade, which intake means is movable with respect to the blade wheel and prevents a deposit, or an adherence of the forage or the like material at the location of the inner ends of the blades in an effective manner.

The intake means which is movable with respect to the blade wheel may be set in motion by the material to be transported itself. However, in general it will be preferable if the intake means are coupled with a drive means and make predetermined relative movements with respect to the blade wheel.

In this case it is of advantage, if the intake means extend parallel to the drive shaft of the blade wheel.

In a favourable embodiment of the blower according to the invention each intake means consists of an intake roller, which extends adjacent and parallel to the inner end of the relative blade and which is rotatably supported by the front end plate and/or the rear end plate of the blade wheel.

Due to the rotation of the intake rollers it is prevented, that the incoming forage or the like material may be deposited on, or may adhere to the inner ends of the blades.

Although no danger of incrustations on the surface of the intake rollers occurs when chopped maize is conveyed which has just been harvested, problems occur when this maize is again conveyed after it has been stored for some time in a storage silo, as the maize contains a viscous product, which is formed during the storage period in the storage silo and which may deposit very easily on the intake rollers, whereafter the rotation of these intake rollers would be hampered.

In order to remove this objection each intake roller may co-operate with a scraper means supported by the blade wheel.

In this case each scraper means may consist of a resilient plate.

If desired, this resilient plate may be provided at regular distances with slits, which extend perpendicular to the end edge, so that resilient lips are formed.

As an alternative for the intake rollers described hereinbefore it is also possible that the inner end of each blade forms or comprises the intake means which is movable with respect to the blade wheel.

In the latter case at least the inner portion of each blade may be elastic and may envelope the intake means which is movable with respect to the blade wheel.

In this case each intake means which is movable with respect to the blade wheel may consist of an intake sleeve, that is mounted on the crank of a driven crank shaft, which is journalled in the front end plate and in the rear end plate of the blade wheel.

It is also possible that the intake means which are movable with respect to the blade wheel make an oscillating movement.

The invention will hereafter be elucidated with reference to the drawing, which shows several embodiments by way of example of a blower according to the invention for the conveyance of forage.

Fig. 1 is a vertical section of an embodiment of a blower according to the invention.

Fig. 2 is a section along the plane II - II in fig. 1.

Fig. 3 shows a detail of the section according to fig. 2 on a larger scale.

Fig. 4 is a cross section of a different blade of a blower according to the invention.

Fig. 5 is a longitudinal section of the intake means of the blade according to fig. 4.

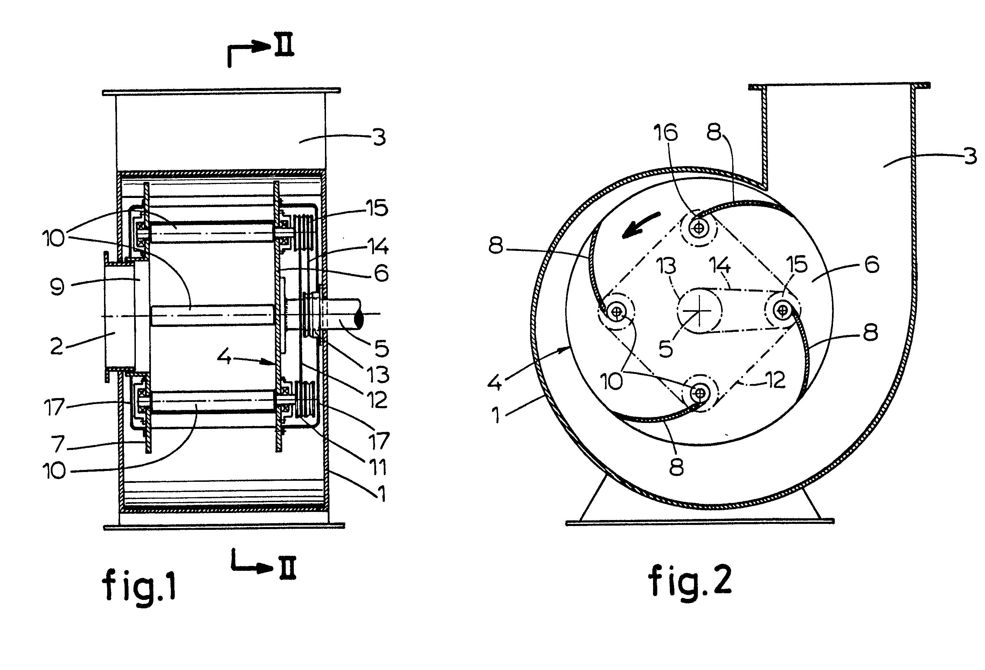

Figs. 1 and 2 show an embodiment by way of example of a blower according to the invention for the pneumatic conveyance, for instance of forage, such as predried grass, chopped maize or the like. This blower comprises a volute 1, which is provided with an inlet opening 2 at one side, which in general connects to a supply tube (not shown) for the material to be conveyed. Further, the volute 1 is provided with a substantially tangential outlet 3.

A blade wheel 4 is journalled in the volute 1 by means of its drive shaft 5, which is connected to a drive means, such as for instance an electric motor (not shown). The blade wheel 4 consists of a rear end plate 6 and a front end plate 7 which runs parallel thereto, curved blades 8 being connected therebetween.

The front end plate 7 is provided with a suction opening 9, which is aligned with and joins the inlet opening 2 of the volute 1. The blades 8 have a constant height, whilst their inner ends and their outer ends run parallel to the drive shaft 5 of the blade wheel 4.

An intake means which is movable with respect to the blade wheel 4 runs at the inner end of each blade 8 and consists in the embodiment according to figs. 1, 2 and 3 of an intake roller 10, which extends adjacent and parallel to the inner end of the relative blade 8 and which is journalled in the two end plates 6, 7.

In the embodiment shown in the drawing by way of example a pulley or a wheel 11 is connected on each of the shafts of the intake rollers 10. These pulleys or wheels 11 are coupled with each other by means of a rope 12, a chain or the like. Further, one of the intake rollers 10 is driven from a central pulley or a central wheel 13 which is fixedly connected to the volute 1 and which has an annular shape, the central axis of said latter pulley or wheel coinciding with the central axis of the drive shaft 5 of the blade wheel 4, the latter pulley or wheel being coupled by means of a rope 14, chain or the like with a pulley or a wheel 15 on the shaft of the relative intake roller 10.

As a matter of fact the intake rollers 10 may also be driven in another way. For instance it is possible to derive this drive from an annular pulley or an annular wheel having a central axis which coincides with the central axis of the drive shaft 5 of the blade wheel 4 and rotating with an angular velocity, which differs from the angular velocity of the blade wheel 4.

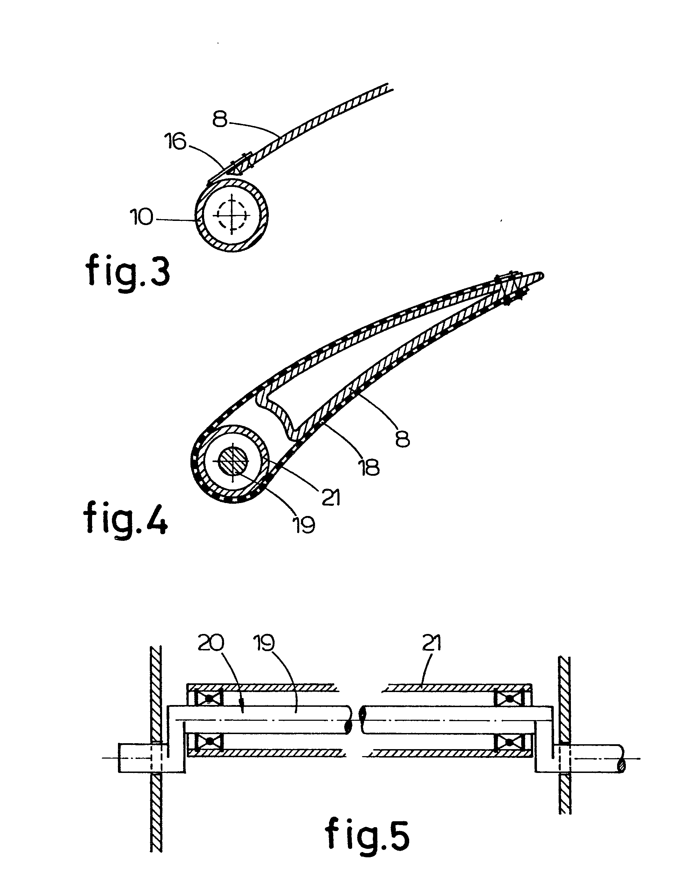

With each intake roller 10 a scraper means 16 co-operates which is supported by the relative blade 8. This scraper means 8 consists in the embodiment shown in the drawing by way of example of a resilient plate, which rests with its free edge on the co-operating intake roller 10 under pre-tension (fig. 3). The drive and the bearing of the intake rollers 10 are protected by dust caps 17 against contamination.

As an alternative for the relative positioning of an intake roller 10 and the co-operating blade 8 as shown in fig. 3 the extension of the blade 8 may pass at least approximately through the central axis of the intake roller 10.

Further, in deviation of the embodiment according to fig. 1, the intake rollers 10 may be passed with a small clearance of approximately 1 mm through passage openings formed in the end plates 6, 7 and may be provided at the outer side of the end plates 6, 7 at some distance of each end plate 6,7 with an axle, on which a bearing with an externally convex outer ring is mounted. The convex outer ring is surrounded by an envelope composed of plates, which is connected by means of bolts or the like to a plurality of spacer collars, which are spaced with respect to each other and which are welded on the outer side of the plates 6, 7. In this embodiment no dust caps 17 are applied. The intake rollers 10 may be simultaneously driven.

In operation the air will flow through the space between each end plate 6, 7, the envelope of the relative bearing and the relative spacer collars, and thereafter inwardly around the intake rollers 10, through the slots in the end plates 6, 7 formed by the clearance, so that it is prevented that the material will clog in these slots or will contaminate the bearings.

Figs. 4 and 5 show a modified embodiment of the intake means. As indicated in fig. 4, the blades 8 are made in the form of profile blades, whilst each blade 8 is practically wholly surrounded by an elastic plate-shaped envelope 18, for instance made of rubber, which is connected on both sides to the blade 8 near the outer end of the blade 8. Inside this elastic envelope 18 an intake sleeve 21 is mounted which is supported by means of bearings on a crank 19 of a crank shaft 20 which is journalled in the two end plates 6, 7. The crank shafts 20 have to displace synchronous with each other in order to prevent an unbalance of the blade wheel 4. For this purpose the crank shafts 20 may be driven by means of a chain drive or a gear drive (not shown).

As an alternative it is also possible that the portion of each blade 8 which lies at the inner end forms the intake means which is displaceable with respect to the blade wheel 4 and that this portion is given for instance an oscillating movement.

Of course, in the embodiment according to fig. 4 drive means for giving an oscillating movement to the intake sleeves 21 may be used instead of the crank shafts 20.

Although in the embodiments shown in the drawing by way of example the intake means are always driven, it is also possible as an alternative to apply intake means which obtain their relative displacement with respect to the blade wheel 4 exclusively due to their contact with the material to be conveyed. However, in general it is preferred to drive the intake means, whilst said drive may be derived with advantage from the drive of the blade wheel 4.

The invention is not restricted to the embodiments shown in the drawing by way of example, which may be varied in several ways within the scope of the invention.

# C l a i m s

1. Blower for pneumatic conveyance, for instance of forage, such as grass, maize or the like, comprising a volute having an inlet opening and being provided with a substantially tangential outlet, and further comprising a driven blade wheel journalled in the volute and having an end plate on which blades are mounted, c h a r a c t e r i z e d in that the blade wheel has a second end plate, which is provided with a suction opening, whilst the blades are connected between the two end plates, an intake means which is movable with respect to the blade wheel extending at the inner end of each blade.

2. Blower according to claim 1, c h a r a c t e r i z e d in that the intake means are coupled with a drive means.

3. Blower according to claim 1 or 2, c h a r a c t e r i z e d in that the intake means extend parallel to the drive shaft of the blade wheel.

4. Blower according to any one of the preceding claims, c h a r a c t e r i z e d in that the second end plate runs at least approximately parallel to the first end plate.

5. Blower according to claim 1, 2, 3 or 4, c h a r a c t e r i z e d in that each intake means consists of an intake roller, which extends adjacent and parallel to the inner end of the relative blade and which is rotatably supported by the front end plate and/or the rear end plate of the blade wheel.

6. Blower according to claim 5, c h a r a c t e r i z e d in that each intake roller co-operates with a scraper means supported by the blade wheel.

7. Blower according to claim 6, c h a r a c t e r i z e d in that each scraper means consists of a resilient plate.

8. Blower according to claim 5, 6 or 7, c h a r a c t e r i z e d in that a first pulley or wheel is connected on the shafts of the intake rollers, which pulleys or wheels are interconnected by a rope, a chain or the like, whilst a second pulley or wheel is connected on the shaft of one of the intake rollers and is coupled with a central pulley or a central wheel having a central axis which coincides with the central axis of the drive shaft of the blade wheel, said central pulley or central wheel either being in rest or rotating with an angular velocity, which differs from the angular velocity of the blade wheel.

9. Blower according to claim 1, c h a r a c t e r- i z e d in that the inner end of each blade forms or comprises the intake means which is movable with respect to the blade wheel.

10. Blower according to claim 9, c h a r a c t e r- i z e d in that at least the inner portion of each blade is elastic and envelopes the intake means which is movable with respect to the blade wheel.

11. Blower according to claim 10, c h a r a c - t e r i z e d in that each intake means which is movable with respect to the blade wheel consists of an intake sleeve, that is mounted on the crank of a driven crank shaft, which is journalled in the front end plate and in the rear end plate of the blade wheel.

12. Blower according to claim 9 or 10, c h a r a c- t e r i z e d in that the intake means which are movable with respect to the blade wheel make an oscillating movement.

13. Blower according to any one of the claims 9 - 12, c h a r a c t e r i z e d in that the movable intake means are displaced synchronous with each other and are driven by means of a chain or a gear drive.

fig.1

fig.2

0032601

fig.3

fig.4

fig.5

European Patent Office    **EUROPEAN SEARCH REPORT**

003260.1

Application number

EP 80 20 1231

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | FR - A - 733 750 (GENTILHOMME) <br> * Whole document * <br><br> -- | 1 | A 01 D 87/10 <br> F 04 D 29/28 <br> 23/00 |
| A | DE - C - 936 949 (GILLES) <br> * Whole document * <br><br> -- | 1 | |
| A | GB - A - 1 395 902 (WEAR-RESIS-TANCE) <br> * Whole document * <br><br> ---- | 1 | |

**TECHNICAL FIELDS SEARCHED (Int. Cl.³)**

A 01 D
F 04 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 30-03-1981 | DE SCHEPPER |